# EUROPÄISCHE PATENTSCHRIFT

(11) **EP 0 834 027 B1**
(45) Veröffentlichungstag und Bekanntmachung des Hinweises auf die Patenterteilung: **24.03.1999**
(21) Anmeldenummer: 96922813.9
(22) Anmeldetag: 15.06.1996
(51) Int. Cl.: F16H 47/04

(54) **HYDROSTATISCH-MECHANISCHES LEISTUNGSVERZWEIGUNGSGETRIEBE**
HYDROSTATIC-MECHANICAL POWER DISTRIBUTION TRANSMISSION
TRANSMISSION A DERIVATION DE PUISSANCE HYDROSTATIQUE--MECANIQUE

(30) Priorität: 23.06.1995 DE 19522833
(43) Veröffentlichungstag der Anmeldung: 08.04.1998
(73) Patentinhaber: ZF FRIEDRICHSHAFEN AG, 88038 Friedrichshafen (DE); DEERE & COMPANY, Moline, Illinois 61265 (US)
(72) Erfinder: LEHLE, Hubert, D-88074 Meckenbeuren (DE); POHLENZ, Jürgen, D-88214 Ravensburg (DE)
(74) Vertreter: Zietlow, Karl-Peter
(86) Internationale Anmeldenummer: EP9602590
(87) Internationale Veröffentlichungsnummer: WO9701049

(56) Entgegenhaltungen:
- EP-A- 0 059 055
- EP-A- 0 513 674
- DE-A- 4 243 018
- FR-A- 2 412 761
- GB-A- 2 058 254

## Beschreibung

Die Erfindung betrifft ein Leistungsverzweigungsgetriebe mit in einem Getriebegehäuse angeordneten mechanischen und hydrostatischen Leistungszweig nach der im Oberbegriff des Anspruchs 1 näher definierten Art.

Ein gattungsgemäßes Leistungsverzweigungsgetriebe ist aus der FR-A-2 412 761 bekannt. Dieses Getriebe besteht aus einem mechanischen und einem hydrostatischen Leistungszweig, wobei die beiden Leistungszweige in einem Getriebegehäuse angeordnet sind sowie über eine gemeinsame Welle angetrieben und in einem Koppelgetriebe summiert werden. Diese Getriebeanordnung erlaubt vier Vorwärts- und zwei Rückwärts-Fahrbereiche.

Das in der genannten Druckschrift offenbarte hydrostatisch-mechanische Leistungsverzweigungsgetriebe weist jedoch den Nachteil auf, daß bei dem Aufbau dieses Getriebes für die Rückwärts fahrt nur zwei Geschwindigkeitsbereiche möglich sind.

Indem nur vier Schaltbereiche für Vorwärtsfahrt und zwei Schaltbereiche für Rückwärts fahrt realisierbar sind, kann rückwärts nicht so schnell wie vorwärts gefahren werden und auch die realisierbaren Zug- bzw. Druckkräfte sind bei Vorwärts- und Rückwärts fahrt unterschiedlich hoch, was insbesondere bei landwirtschaftlich genutzten Fahrzeugen einen erheblichen Nachteil darstellt.

Der vorliegenden Erfindung liegt daher die Aufgabe zugrunde, ein Leistungsverzweigungsgetriebe mit einem mechanischen und hydrostatischen Leistungszweig vorzusehen, welches gegenüber dem Stand der Technik geringe Einbaumaße aufweist und welches gleiche Fahrgeschwindigkeiten bei Vor- und Rückwärtsfahrt erlaubt.

Erfindungsgemäß wird diese Aufgabe dadurch gelöst, daß das Koppelgetriebe auf der Antriebswelle angeordnet ist und daß der letzte Planetenradsatz des Koppelgetriebes mit Kupplungen K_{V} für Vorwärtsfahrt und K_{R} für Rückwärts fahrt verbindbar ist, wobei die Kupplungen K_{V} und K_{R} mit der Abtriebswelle verbindbar sind.

Mittels der beschriebenen Anordnung ergibt sich eine entsprechend geringere Baugröße des erfindungsgemäßen Leistungsverzweigungsgetriebes und außerdem ist der Abstand von der Antriebswelle zur Abtriebswelle frei wählbar und daher kann das erfindungsgemäße Leistungsverzweigungsgetriebe in unterschiedliche Fahrzeugtypen eingebaut werden.

Gleichzeitig können mit der beschriebenen erfindungsgemäßen Anordnung gleichviele Schaltbereiche für Vorwärts- und Rückwärtsfahrt realisiert werden, wodurch ein weiterer Nachteil der Getriebe des Standes der Technik beseitigt ist, die - wie bereits erwähnt - eine unterschiedliche Anzahl von Schaltbereichen für Vorwärts- und Rückwärts fahrt zur Verfügung stellten. Die Motordrehzahl kann daher bei dem erfindungsgemäßen Leistungsverzweigungsgetriebe bei Vorwärts- und Rückwärtsfahrt jeweils auf denselben Wert verbrauchsoptimal eingestellt werden, um eine bestimmte Fahrgeschwindigkeit und Abtriebsleistung mit dem erfindungsgemäßen Leistungsverzweigungsgetriebe zu erreichen.

Ein weiterer Vorteil der erfindungsgemäßen Anordnung ist das Einsparen von Zahnrädern, da ein direkter Antrieb der Antriebswelle und somit auch des Koppelgetriebes, beispielsweise durch eine Kraftmaschine, möglich ist.

In vorteilhafter Ausgestaltung der Erfindung kann vorgesehen sein, daß in der Antriebswelle Bohrungen für das Zuführen von Drucköl zu den Kupplungen und zur Schmieröl zuführung für das Koppelgetriebe vorgesehen sind.

Durch das Vorsehen der Bohrungen in der Antriebswelle können auf einfache Art und Weise Drucköl zu den Kupplungen und Schmieröl für das Koppelgetriebe zugeführt werden, so daß keine zusätzlichen aufwendigen Einrichtungen zur Zuführung der genannten Medien notwendig sind und hierdurch der Aufbau des erfindungsgemäßen Leistungsverzweigungsgetriebes wesentlich vereinfacht ist.

Durch die erfindungsgemäße Anordnung des Koppelgetriebes kann auch ein zweiteiliges Getriebegehäuse vorgesehen werden, mit einem der Eingangsseite der Antriebswelle zugewandten vorderen Gehäuseteil und einem hinteren Gehäuseteil, wodurch der gesamte Aufbau des erfindungsgemäßen Leistungsverzweigungsgetriebes sowie dessen Montage und Wartung wesentlich vereinfacht werden.

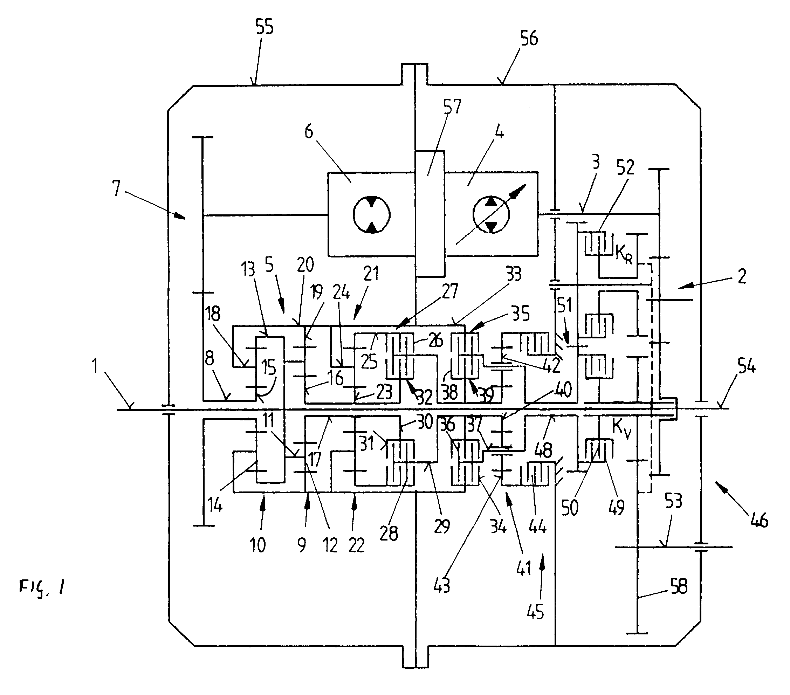

Vorteilhafte Ausgestaltungen und Weiterbildungen der Erfindung ergeben sich aus weiteren Unteransprüchen und dem nachfolgend anhand der Zeichnung prinzipmäßig beschriebenen Ausführungsbeispiel.

Die einzige Figur zeigt schematisch den Aufbau eines Ausführungsbeispieles eines erfindungsgemäßen Leistungsverzweigungsgetriebes.

Eine Antriebswelle 1 treibt über ein Vorgelege 2 und eine fliegend gelagerte und daher Axialspiele ausgleichende Verbindungswelle 3 eine verstellbare Hydrostat-Verstelleinheit 4 an. Des weiteren wird von der Antriebswelle 1 ein mehrweiliges Koppelgetriebe 5 angetrieben. Das mehrwellige Koppelgetriebe 5 ist hierbei direkt auf der Antriebswelle 1 angeordnet. Die Hydrostat-Verstelleinheit 4 wirkt mit einer Hydrostat-Konstanteinheit 6 zusammen. Die Hydrostat-Konstanteinheit 6 treibt über ein Vorgelege 7 eine zweite Eingangswelle 8 des Koppelgetriebes 5 an. Das Koppelgetriebe 5 enthält zwei dreiwellige Planetenradsätze 9, 10. Die Antriebswelle 1 ist mit einem Planetenträger 11 des Planetenradsatzes 9 verbunden. Der Planetenradsatz 9 enthält Planetenräder 12. Die Antriebswelle 1 ist fest mit einem Hohlrad 13 des zweiten Planetenradsatzes 10 verbunden. Der zweite Planetenradsatz 10 enthält Planetenräder 14. Die zweite Eingangswelle 8 ist fest mit einem Sonnenrad 15 des zweiten Planetenradsatzes 10 verbunden. Ein Sonnenrad 16 des ersten Planetenradsatzes 9 ist auf einer Koppelwelle 17 befestigt. Ein Planetenradträger 18 des zweiten Planetenradsatzes 10 ist mit einem Hohlrad 19 des Planetenradsatzes 9 und einer Koppelwelle 20 verbunden. Die Koppelwellen 17 und 20 sind mit einem zweiten Koppelgetriebe 21 verbunden, welches einen Planetenradsatz 22 aufweist. Ein Sonnenrad 23 des Planetenradsatzes 22 ist mit dem Sonnenrad 16 des ersten Planetenradsatzes 9 und der Planetenradträger 18 des zweiten Planetenradsatzes 10 ist mit einem Planetenradträger 24 des Planetenradsatzes 22 über die Koppelwelle 20 verbunden.

An einem Hohlrad 25 des Planetenradsatzes 22 sind Außenlamellen 26 einer Kupplung 27 drehfest angebracht. Die Außenlamellen 26 greifen zwischen Lamellen 28, die auf einer Welle 29 drehfest angebracht sind.

Auf der Koppelwelle 17 ist ein Träger 30 montiert, der über drehfeste Innenlamellen 31 zwischen die auf der Welle 29 drehfest montierten Lamellen 28 einer Kupplung 32 eingreift.

An einer mit der Koppelwelle 20 verbundenen Zwischenwelle 33 sind Außenlamellen 34 einer Kupplung 35 drehfest montiert. Die Außenlamellen 34 greifen zwischen Lamellen 36, die auf einer Welle 37 drehfest angebracht sind. Die Koppel- und Zwischenwelle 20, 33 sind als einstückiges Bauteil gefertigt.

Die Welle 29 enthält drehfeste Innenlamellen 38, die zwischen die Lamellen 36 einer Kupplung 39 greifen.

Die Welle 29 ist fest mit einem Sonnenrad 40 eines vierten Planetenradsatzes 41 verbunden. Der vierte Planetenradsatz 41 weist Planetenräder 42 auf. Ein Hohlrad 43 des vierten Planetenradsatzes 41 ist über eine Lamellenbremse 45 mit einem Getriebegehäuse 46 verbindbar.

Die Welle 37 trägt die Planetenräder 42 des vierten Planetenradsatzes 41 und ist mit einer Welle 48 verbunden. Außenlamellen 49 bilden mit Innenlamellen 50 eine Kupplung K_{V} für Vorwärtsfahrt. Die Außenlamellen der Kupplung K_{V} sind mit der Welle 48 drehfest verbunden.

Die Welle 48 ist ferner über ein Umkehrgetriebe 51 mit Außenlamellen 52 einer Kupplung K_{R} verbunden. Sowohl die Kupplung K_{R} als auch die Kupplung K_{V} können die jeweiligen Drehmomente auf eine Abtriebswelle 53 übertragen, wobei am ausgangsseitigen Ende des Leistungsverzweigungsgetriebes auf der Antriebswelle 1 eine nicht dargestellte Zapfwellenkupplung angeordnet ist, von der aus eine Zapfwelle 54 angetrieben wird.

Aus zeichentechnischen Gründen ist die Kupplung K_{R} relativ weit von der Abtriebswelle 53 entfernt angeordnet dargestellt. In der Praxis wird die Kupplung K_{R} genauso wie die Kupplung K_{V} neben der Antriebswelle 1 angeordnet und, wie durch die gestrichelte Linie in der Figur angedeutet, mit einem auf der Abtriebswelle 53 vorgesehenen Zahnrad 58 wirkverbunden sein.

Das Getriebegehäuse 46 ist zweiteilig ausgeführt und weist ein der Eingangsseite der Antriebswelle 1 zugewandtes vorderes Gehäuseteil 55 sowie ein hinteres Gehäuseteil 56 auf.

An dem vorderen Gehäuseteil 55 ist stirnseitig eine Platte 57 angeordnet, an welcher die Hydrostat-Verstelleinheit 4 und die Hydrostat-Konstanteinheit 6 angebracht sind. Diese Einheiten können über Gummilager befestigt sein. Die Schmierung der Lager kann zentral erfolgen.

Die Antriebswelle 1, auf der das Koppelgetriebe 5 angeordnet ist, trägt und zentriert entsprechend der oben beschriebenen Anordnung die vier Planetenradsätze 9, 10, 22 und 41.

Um das Zuführen von Drucköl zu den Kupplungen 27, 32, 35, 39 zu ermöglichen, sind in der Antriebswelle 1 entsprechende in Längsrichtung der Antriebswelle 1 verlaufende Bohrungen vorgesehen, wobei über eine weitere Bohrung in der Antriebswelle 1 dem Koppelgetriebe 5 Schmieröl zugeführt wird.

Die Zapfwelle 54 ist über die nicht dargestellte Zapfwellenkupplung direkt von der Antriebswelle 1 aus antreibbar. Außerdem ist ein Zahnrad des Vorgeleges 2 für den hydrostatischen Leistungszweig auf der Antriebswelle 1 angebracht.

Nachfolgend soll nun die Funktionsweise des in der Figur dargestellten Leistungsverzweigungsgetriebes beschrieben werde.

Über die Antriebswelle 1 wird die Hydrostat-Verstelleinheit 4 proportional zur Drehzahl einer Kraftmaschine, beispielsweise einer Verbrennungskraftmaschine, angetrieben. Durch. Verstellen des Fördervolumens der Hydrostat-Verstelleinheit 4 wird die Hydrostat-Konstanteinheit 6 beschleunigt und das Hohlrad 25 des Planetenradsatzes 22 durch Summieren der Drehzahlen der Antriebswelle 1 und der zweiten Eingangswelle 8 in den Koppelgetrieben 5 und 21 auf Drehzahl Null gebracht. Ist die Drehzahl Null des Hohlrades 25 erreicht, so schließt die Kupplung 27. Die Summe der Leistungen aus dem hydrostatischen und dem mechanischen Zweig, also die Summe der über die Antriebswelle 1 und die zweite Eingangswelle 8 übertragenen Leistungen, fließt über das Sonnenrad 16, den Planetenradträger 18, die Koppelwellen 17, 20 und das Hohlrad 25 des Planetenradsatzes 22 sowie die Kupplung 27 zum Sonnenrad 40 des vierten Planetenradsatzes 41. Die Lamellenbremse 45 ist geschlossen, so daß das Hohlrad 43 des vierten Planetenradsatzes 41 stillsteht. Die Leistung fließt somit über eine der Kupplungen K_{V} oder K_{R} auf die Abtriebswelle 53.

Die weitere Wandlung des Übersetzungsverhältnisses des dargestellten Leistungsverzweigungsgetriebes wird durch ein weiteres Verstellen der Hydrostat-Verstelleinheit 4 erreicht. Hat nach Durchlaufen des ersten Fahrbereichs des Leistungsverzweigungsgetriebes das Hohlrad 25 Synchrondrehzahl mit der Drehzahl des Trägers 30 erreicht, schließt die Kupplung 32 und die Kupplung 27 öffnet sich. Sodann fließt die summierte Leistung über das Sonnenrad 16 des Planetenradsatzes 9, die Koppelwelle 17 und die geschlossene Kupplung 32. Der weitere Leistungsfluß in diesem Fahrbereich erfolgt über das Sonnenrad 40 des vierten Planetenradsatzes 41 und bei geschlossener Bremse 45 und somit feststehendem Hohlrad 43 entweder über K_{V} oder K_{R} zur Abtriebswelle 53. Im Gegensatz zum Stand der Technik erfolgt die Drehrichtungsumkehr, also das Anwählen von Vorwärtsfahrt oder Rückwärtsfahrt, nicht in dem vierten Planetenradsatz 41, sondern in den Kupplungen K_{V} und K_{R}, wodurch in dem vorliegenden Ausführungsbeispiel jeweils vier Fahrstufen für Vorwärts- und Rückwärtsfahrt zur Verfügung stehen.

Um in den dritten Fahrbereich zu schalten, wird bei Synchrondrehzahl der Zwischenwelle 33 und der Welle 37 die Kupplung 35 geschlossen und sodann unmittelbar die Lamellenbremse 45 geöffnet. Die kombinierte Leistung aus dem mechanischen und dem hydrostatischen Leistungszweig fließt sodann über die Koppelwelle 20 und die Zwischenwelle 33 über die Kupplung 35 und bei geöffneter Lamellenbremse 45 über die Kupplung K_{V} oder K_{R} auf die Abtriebswelle 53 des Leistungsverzweigungsgetriebes.

Der vierte Fahrbereich des Leistungsverzweigungsgetriebes wird erreicht durch Schließen der Kupplung 39 bei Synchrondrehzahl der Kupplung 35 und unmittelbar darauffolgendem Öffnen der Kupplung 35. Die summierte Leistung aus dem mechanischen und hydrostatischen Leistungszweig fließt sodann über die Sonne 16 des ersten Planetenradsatzes 9 über die Kupplung 32 und die Kupplung 39 und bei geöffneter Lamellenbremse 45 zur Abtriebswelle 53 des Getriebes.

Je nachdem, ob die Kupplung K_{V} oder K_{R} geöffnet ist, kann in den vier beschriebenen Fahrbereichen bzw. Fahrstufen die Fahrtrichtung, also Vorwärts- oder Rückwärtsfahrt, angewählt werden.

Es soll noch erwähnt werden, daß im Stillstand, also beim Erreichen der Drehzahl Null, die beiden Kupplungen K_{V} und K_{R} geschlossen sind und die Kupplung 27 gleichzeitig geöffnet wird. Der gesamte Abtriebsstrang ist hierbei verblockt, d. h. die verstellbare Hydrostateinheit 4 ist kräftefrei und das Fahrzeug, in welches das beschriebene Leistungsverzweigungsgetriebe eingebaut ist, steht auch ohne Betätigen der Betriebsbremse oder Parkbremse sicher und kann nicht ungewollt wegrollen. Beim Anwählen der gewünschten Fahrtrichtung, z. B. für Vorwärtsfahrt, wird die jeweils für die entgegengesetzte Fahrtrichtung notwendige Kupplung geöffnet, d. h. bei Vorwärtsfahrt wird die Kupplung K_{R} geöffnet, während die Kupplung K_{V} geschlossen bleibt und die Kupplung 27 wird gleichzeitig wieder geschlossen.

Mit dem beschriebenen Leistungsverzweigungsgetriebe kann das Fahrzeug bei kleinen Geschwindigkeiten über die Kupplungen K_{V} und K_{R} reversiert werden. Das bedeutet beispielsweise, daß die Kupplung K_{R} bereits druckmoduliert geschlossen wird, wenn sich das Fahrzeug noch vorwärts bewegt. Ab einem bestimmten Modulationsdruck wird die bisher geschlossene Kupplung K_{V} geöffnet und das sich vorwärts bewegende Fahrzeug über die Kupplung K_{R} bis zum Stillstand abgebremst und anschließend in Rückwärtsfahrtrichtung beschleunigt. Die aktuell eingestellte Getriebeübersetzung bleibt während des Reversiervorgangs konstant. Sie wird erst wieder verändert, nachdem die Reversierung über die Kupplungen K_{V}/K_{R} abgeschlossen ist. Es sind dadurch schnelle Wendeschaltungen ohne Zugkraftunterbrechung mit gutem Schaltkomfort erzielbar.

### Bezugszeichen

- 1: Antriebswelle
- 2: Vorgelege
- 3: Verbindungswelle
- 4: Hydrostat-Verstelleinheit
- 5: Koppelgetriebe
- 6: Hydrostat-Konstanteinheit
- 7: Vorgelege
- 8: zweite Eingangswelle
- 9: Planetenradsatz
- 10: Planetenradsatz
- 11: Planetenträger
- 12: Planetenrad
- 13: Hohlrad
- 14: Planetenrad
- 15: Sonnenrad
- 16: Sonnenrad
- 17: Koppelwelle
- 18: Planetenradträger
- 19: Hohlrad
- 20: Koppelwelle
- 21: zweites Koppelgetriebe
- 22: Planetenradsatz
- 23: Sonnenrad
- 24: Planetenradträger
- 25: Hohlrad
- 26: Außenlamellen
- 27: Kupplung
- 28: Lamellen
- 29: Welle
- 30: Träger
- 31: Innenlamellen
- 32: Kupplung
- 33: Zwischenwelle
- 34: Außenlamellen
- 35: Kupplung
- 36: Lamellen
- 37: Welle
- 38: Innenlamellen
- 39: Kupplung
- 40: Sonnenrad
- 41: vierter Planetenradsatz
- 42: Planetenrad
- 43: Hohlrad
- 44: Lamellen
- 45: Lamellenbremse
- 46: Getriebegehäuse
- 47: -
- 48: Welle
- 49: Außenlamellen
- 50: Innenlamellen
- 51: Umkehrgetriebe
- 52: Außenlamellen
- 53: Abtriebswelle
- 54: Zapfwelle
- 55: vorderes Gehäuseteil
- 56: hinteres Gehäuseteil
- 57: Platte
- 58: Zahnrad

## Patentansprüche

1. Leistungsverzweigungsgetriebe mit einem mechanischen und einem hydrostatischen Leistungszweig,
- wobei die beiden Leistungszweige in einem Getriebegehäuse (46) angeordnet sind sowie über eine gemeinsame Antriebswelle (1) angetrieben und in einem Koppelgetriebe (5) summiert werden;
- wobei das mehrere Planetenradsätze (9, 10, 22, 41) und Kupplungen bzw. Schaltelemente aufweisende Koppelgetriebe mit einer Abtriebswelle (53) trieblich verbindbar ist;
- wobei das Koppelgetriebe auf der Antriebswelle angeordnet ist und
- wobei der letzte Planetenradsatz (41) des Koppelgetriebes mit einer Kupplung (K_{V}) für Vorwärtsfahrt und einer Kupplung (K_{R}) für Rückwärts fahrt verbindbar ist,
dadurch **gekennzeichnet,** daß mit den Kupplungen bzw. Schaltelementen im Koppelgetriebe vier Fahrbereiche schaltbar sinn, die wahlweise mittels der Vorwärtsfahrt-Kupplung (K_{V}) und der Rückwärtsfahrt-Kupplung (K_{R}) auf die Antriebswelle (53) geschaltet werden, wobei die Zugkraft des Fahrzeuges sowohl bei Vorwärts- als auch bei Rückwärtsfahrt in dem jeweilig gleichen Fahrbereich annähernd gleich ist.

2. Leistungsverzweigungsgetriebe nach Anspruch 1, dadurch gekennzeichnet, daß in der Antriebswelle (1) Bohrungen für das Zuführen von Drucköl zu den Kupplungen (27, 32, 35, 39, K_{V}, K_{R}) und zur Schmierölzuführung für das Koppelgetriebe (5) vorgesehen sind.

3. Leistungsverzweigungsgetriebe nach Anspruch 1 oder 2, dadurch **gekennzeichnet**, daß eine Zapfwelle (54) direkt von der Antriebswelle (1) antreibbar ist.

4. Leistungsverzweigungsgetriebe nach einem der Ansprüche 1 bis 3, dadurch **gekennzeichnet,** daß das Getriebegehäuse (46) zweiteilig ausgebildet ist, mit einem der Eingangsseite der Antriebswelle (1) zugewandten vorderen Gehäuseteil (55) und einem hinteren Gehäuseteil (56).

## Claims

1. A power distribution transmission provided with one mechanical and one hydrostatic power branch,
- with both power branches arranged in one transmission housing (46), being driven via a common drive shaft (1) and summarized in a coupling gear (5);
- with the coupling gear, featuring a number of planetary gear sets (9, 10, 22, 41) and clutches or shift elements, being connectable with an output shaft;
- with the coupling gear being arranged on the input shaft, and
- with the last planetary gear set (41) of the coupling gear being connectable with one clutch (K_{V}) for forward travel and one clutch (K_{R}) for reverse travel;
**characterized** by the fact that with the couplings or shift elements in the coupling gear, four operating ranges are shiftable, which can be connected to the output shaft (53) either by means of the forward travel clutch (K_{V}) or by means of the reverse travel clutch (K_{R}), with the vehicle's tractive force having approximately the same operating range, both for forward and reverse travel.

2. A power distribution transmission according to claim 1, **characterized** by the fact that the drive shaft (1) features bores for the supply of pressurized oil to the clutches (27, 32, 35, 39, K_{V}, K_{R}) and the supply of lubricating oil to the coupling gear (5).

3. A power distribution transmission according to claim 1 or 2, **characterized** by the fact that a PTO-shaft (54) is directly driveable by the drive shaft (1).

4. A power distribution transmission according to one of the claims 1 to 3, **characterized** by the fact that the transmission housing (46) is made of two parts: a front part (55) facing the input side of the drive shaft (1) and a rear part (56).

## Revendications

1. Boîte de vitesses à branches de transmission de la puissance, comportant une branche de transmission de la puissance mécanique et une branche de transmission de la puissance hydrostatique,
- sachant que les deux branches sont disposées dans un carter de boîte de vitesses (46), qu'elles sont entraînées par un arbre d'entrée commun (1) et qu'elles sont raccordées dans un mécanisme de sommation logé dans une boîte intermédiaire (5);
- sachant que la boîte intermédiaire, comportant plusieurs trains planétaires (9, 10, 22, 41), embrayages et éléments de commande, peut être en liaison d'entraînement avec un arbre de sortie (53);
- sachant que la boîte intermédiaire est logée sur l'arbre d'entrée et
- sachant que le dernier train planétaire (41) de la boîte intermédiaire peut être relié à un embrayage pour l'enclenchement de la marche avant (K_{V}) et un embrayage pour l'enclenchement de la marche arrière (K_{R}),
**caractérisée** en ce que, par l'intermédiaire des embrayages ou des éléments de commande logés dans la boîte intermédiaire, il est possible d'enclencher quatre plages de vitesses, qui, au choix, sont commutées, au moyen de l'embrayage de marche avant (K_{V}) ou à l'aide de l'embrayage de marche arrière (K_{R}), sur l'arbre de sortie (53), en tenant compte du fait que - respectivement dans la même plage de vitesses - la force de traction du véhicule est presque égale en marche avant et en marche arrière.

2. Boîte de vitesses à branches de transmission de la puissance selon revendication 1, **caractérisée** en ce que dans l'arbre d'entrée (1) sont prévus des trous d'alimentation en huile de pression des embrayages (27, 32, 35, 39, K_{V}, K_{R}) et des trous d'alimentation en huile lubrifiante de la boîte intermédiaire (5).

3. Boîte de vitesses à branches de transmission de la puissance selon les revendications 1 ou 2, **caractérisée** en ce qu'un arbre de prise de mouvement (54) peut être entraîné directement par l'arbre d'entrée (1).

4. Boîte de vitesses à branches de transmission de la puissance selon les revendications de 1 à 3, **caractérisée** en ce que le carter de la boîte de vitesses (46) est constitué par deux parties, c'est-à-dire une partie antérieure du carter (55), orientée vers le coté entrée de l'arbre d'entrée (1), et une partie postérieure du carter (56).
